# EUROPÄISCHE PATENTSCHRIFT

(11) **EP 2 388 112 B1**
(45) Veröffentlichungstag und Bekanntmachung des Hinweises auf die Patenterteilung: **19.12.2012**
(21) Anmeldenummer: 11003419.6
(22) Anmeldetag: 26.04.2011
(51) Int. Cl.: B25J 15/06, B65G 47/91, B65B 35/18

(54) **Verfahren und Vorrichtung zum Aufnehmen, Verlagern und Ablegen von Portionen eines Lebensmittels**
Method and device for picking up, transferring and depositing portions of a food item
Procédé et dispositif pour soulever, déplacer et déposer des portions d'un aliment

(30) Priorität: 30.04.2010 DE 102010028411
(43) Veröffentlichungstag der Anmeldung: 23.11.2011
(73) Patentinhaber: Reifenhäuser, Uwe, 57632 Flammersfeld (DE)
(72) Erfinder: Reifenhäuser, Uwe, 57632 Flammersfeld (DE)
(74) Vertreter: Bauer, Dirk

(56) Entgegenhaltungen:
- EP-A1- 0 239 547
- DE-A1- 3 834 866
- US-A- 3 685 624
- US-A- 3 774 778
- US-B1- 6 419 291

## Beschreibung

### Einleitung

Die Erfindung betrifft ein Verfahren
- Portionen eines Lebensmittels werden auf einer Oberfläche eines insbesondere umlaufenden Transportmittels in eine Transportrichtung bewegt,
- sukzessive nacheinander wird jeweils eine Portion mittels einer Aufnahmeeinrichtung aufgenommen, wobei
   - die Aufnahmeeinrichtung ein Saugelement aufweist, das mit einer Kontaktfläche mit einer einer Auflagefläche der Portion entgegen gesetzten freien Oberfläche der Portion in Kontakt gebracht wird, und wobei
   - nach hergestelltem Kontakt in einem Innenraum des Saugelements ein Unterdruck erzeugt wird, wodurch die Portion an dem Saugelement festgehalten wird,
- die festgehaltene Portion wird von der Oberfläche des Transportmittels abgehoben, indem die Aufnahmeeinrichtung entsprechend bewegt wird,
- die abgehobene Portion wird mittels der Aufnahmeeinrichtung quer zu der Transportrichtung bewegt und oberhalb des Zielortes positioniert,
- der Unterdruck in dem Innenraum des Saugelements wird aufgehoben, wodurch die positionierte Portion an dem Zielort abgelegt wird.
Darüber hinaus betrifft die Erfindung eine Vorrichtung zum Aufnehmen, Verlagern und Ablegen von Portionen, insbesondere Scheiben, eines Lebensmittels, wobei die Portionen von einem sich bewegenden Transportmittel, insbesondere eines umlaufenden Transportbandes, aufnehmbar und zu einem Zielort bewegbar und dort ablegbar sind, mit
- einer Trageinrichtung, die mindestens in vertikale und in eine Richtung quer zu einer Transportrichtung des Transportmittels bewegbar ist,
- einer Aufnahmeeinrichtung, die an der Trageinrichtung angeordnet ist und mit der eine Portion aufnehmbar ist,
- einem Saugelement der Aufnahmeeinrichtung, das mit einer Kontaktfläche mit einer einer Auflagefläche der Portion entgegen gesetzten freien Oberfläche der Portion in Kontakt bringbar ist, und
- einer Einrichtung zur Erzeugung eines Unterdrucks, mit der nach Herstellung eines Kontakts zwischen der Kontaktfläche des Saugelements und der Auflagefläche der Portion ein Unterdruck in einem Innenraum der Saugeinrichtung erzeugbar ist, wodurch die Portion an dem Saugelement fixierbar und durch Aufhebung des Unterdrucks an einem Zielort der Portion von der Aufnahmeeinrichtung ablegbar ist.

### Stand der Technik

Das vorstehend genannte Verfahren und die zu dessen Durchführung verwendete vorstehend charakterisierte Vorrichtung sind allgemein bekannt. Angewendet werden diese Verfahren und Vorrichtungen insbesondere in Verbindung mit Schneidverfahren bzw. -maschinen, mit denen aus strangförmigen Lebensmitteln sukzessive nacheinander Lebensmittelportionen, insbesondere in Form von Scheiben, erzeugt und nacheinander von der Schneidmaschine weg transportiert werden, typischerweise auf Transportbändern oder -riemchen. Häufig schließt sich an eine Schneidmaschine eine Verpackungsmaschine zur Verpackung der Lebensmittelportionen in Selbstbedienungs-Verpackungseinheiten an. Hierzu müssen die auf dem Transportmittel befindlichen Portionen z.B. in schalenförmige Unterteile von SB-Verpackungseinheiten umgelagert werden, was typischerweise mit Hilfe robotergesteuerter Greif- oder Aufnahmesysteme erfolgt. Die Trageinrichtungen werden meist von Roboterarmen, Schienensystemen oder Portaleinrichtungen gebildet. Allgemein bekannt ist insbesondere die Verwendung von Aufnahmeeinrichtungen, die auf dem Prinzip der Ansaugung der Portionen basieren, um letztere temporär an einem Saugelement zu fixieren und mit dieser verlagern zu können. Die Aufnahmeinrichtungen verfügen meist über ein Saugelement in Form einer elastischen Saugglocke, die sich auch etwas unregelmäßigen Oberflächenformen der aufzunehmenden Lebensmittelportion anpassen kann und eine sichere Abdichtung des Unterdruckbereichs gewährleisten soll. Die Unterdruckerzeugung selbst erfolgt mit Hilfe von Vakuumpumpen, die im Abstand von der Aufnahmeeinrichtung und auch dem Roboter selbst an einem stillstehenden Ort angeordnet sind, typischerweise sogar in einem benachbarten Raum. Die Unterdruckübertragung erfolgt in diesen Fällen über eine Unterdruckleitung, die eine nicht unbeträchtliche Länge aufweisen kann, jedenfalls im Bereich einer Mehrzahl von Metern. Beispielsweise ist aus der US 2006/0182603 A1 ein mit Gabeln bestückter Greifer mit einem ein Saugelement bekannt. Allerdings ist darin die genaue Ausgestaltung des Saugelements nicht beschrieben. Auch aus der EP 0 239 547 A1 ist ein Verfahren sowie eine Vorrichtung zum Aufnehmen, Verlagern und Ablegen von Portionen eines Lebensmittels bekannt, wobei der Unterdruck in dem Innenraum des Saugelements mit Hilfe einer Vakuumpumpe erzeugt wird.

Auch wenn die Funktionsweise der bekannten vakuumbasierten Aufnahmeeinrichtungen grundsätzlich zufrieden stellend ist, bestehen jedoch in hygienischer Hinsicht gewisse Problerne. Dies rührt daher, weil aus dem Bereich der Anhaftzone der Lebensmittelportion an dem Saugelement kleinere Lebensmittelpartikel abgelöst werden können, die durch das Vakuum in die Verbindungsleitung zur Vakuumpumpe und schließlich durch die gesamte Länge der Leitung bis in die Vakuumpumpe selbst befördert werden. Hier geraten derartige teilweise auch sehr kleine Partikel in den Bereich sich bewegender, insbesondere rotierender oder aufeinander gleitender Bauteile der Vakuumpumpe. Hierdurch entsteht ein feiner Lebensmittelschmier, der gewisse Bereiche der Pumpe belegen und sich in Ritzen und Spalten festsetzen kann und eine sehr gute Grundlage für mikrobielle Aktivitäten darstellt. Die Reinigung der betroffenen Bereiche in den Vakuumpumpen ist äußerst schwierig bis unmöglich und würde aufgrund der schwierigen Zugänglichkeit eine sehr weit reichende Demontage der Vakuumpumpen erforderlich machen. Auch die langen Verbindungsleitungen zwischen der Unterdruckpumpe und Aufnahmeeinrichtung lassen sich nur schwierig von anhaftenden Lebensmittelverunreinigungen befreien.

Ansiedlungen von Mikroorganismen, insbesondere von Bakterien und Pilzen, stellen eine im Bereich der Schneid- und Verpackungstechnologie nicht zu duldende Gefahr dar. Über die Raumluft verbreitete Mikroorganismen stellen nämlich eine echte Kontaminationsquelle dar, die zu einem vorzeitigen Verderb der geschnittenen und anschließend verpackten Lebensmittel führen kann. Insbesondere bei den langen Haltbarkeitsdauern, die heute bei SB-Verpackungseinheiten vom Handel bzw. Verbraucher gefordert werden, stellt eine Belastung der Lebensmittelportionen mit mikrobiellen Keimen eine nicht zu akzeptierende Qualitätsverschlechterung dar.

Aus der DE 10 2004 017 898 A1 ist eine Saugvorrichtung bekannt, bei der die Erzeugung des Unterdrucks mittels eines Druckkolbens innerhalb einer Unterdruckerzeugungseinrichtung erfolgt, die unmittelbar über einem Haltekopf der Saugvorrichtung angeordnet ist und einen elektrischen Lineardirektantrieb aufweist, dessen Läufer den Kolben bildet.

Nachteilig bei der vorgenannten Saugvorrichtung ist ihre hohe Trägheit, die auf die unmittelbar oberhalb des Haltekopfes angeordnete Unterdruckerzeugungseinrichtung zurückzuführen ist und die einer schnellen Positionierung eines Gegenstandes, also einer hohen Dynamik hinsichtlich der Positionierung, entgegensteht. Der offenbarte Lineardirektantrieb verursacht darüber hinaus einen großen Bauaufwand.

Ferner ist aus der US 6,419,291 B1 eine Vakuumgreifer-Einrichtung mit einem aufblasbaren Greifer zur Entfernung von in Rohrleitungen, Tunneln oder Bohrungen eingeklemmten Gegenständen bekannt, bei der der in dem Greifer erforderliche Unterdruck mittels einer Kolben-Zylinder-Einheit erzeugt wird.

### Aufgabe

Der Erfindung liegt die Aufgabe zugrunde, ein Verfahren und eine Vorrichtung zum Aufnehmen, Verlagern und Ablegen von Lebensmittelportionen vorzuschlagen, mit dem bzw. mit der bei großer Dichtigkeit der Saugvorrichtung eine hohe Dynamik des Bewegungsablaufs ermöglicht wird. Vorzugsweise soll ferner die Nacherzeugung von Unterdruck ermöglicht werden.

### Lösung

Ausgehend von einem Verfahren der eingangs beschriebenen Art wird die Aufgabe erfindungsgemäß dadurch gelöst, dass der Unterdruck in dem Innenraum des Saugelements mit Hilfe einer Kolben-Zylinder-Einheit erzeugt wird, und zwar dadurch, dass ein Kolben der Kolben-Zylinder-Einheit in einem Zylinder der Kolben-Zylinder-Einheit pro Fixiervorgang einer Portion eine Hubbewegung vollführt, wobei der Unterdruck von der von der Aufnahmeeinrichtung beabstandet und vorzugsweise stillstehend angeordneten Kolben-Zylinder-Einheit über eine vorzugsweise flexible Leitung zu dem Saugelement der Aufnahmeeinrichtung übertragen wird, wobei der Kolben der Kolben-Zylinder-Einheit zunächst nur um einen Teilhub des maximalen Hubs bewegt und der in dem Innenraum des Saugelements herrschende Unterdruck gemessen wird und bei Unterschreitung eines Grenzwertes des Betrags des Unterdrucks der Hub des Kolbens vergrößert wird, um den Unterdruck wieder zu vergrößern. In diesem Zusammenhang sei erwähnt, dass der Kolben pro Fixiervorgang nur in eine Richtung in dem Zylinder bewegt wird, dass also insbesondere keine oszillierende Hubbewegung wie etwa bei einer kontinuierlich durchlaufenden Kolbenpumpe stattfindet. Vielmehr findet pro Fixiervorgang nur eine in dieselbe Richtung erfolgende Bewegung des Kolbens maximal zwischen seinem oberen und unteren Totpunkt statt, d.h. der maximale Weg des Kolbens entspricht dem maximalen Kolbenhub.

Dadurch, dass der Kolben der Kolben-Zylinder-Einheit zunächst nur um einen Teilhub des maximalen Hubs bewegt und der in dem Innenraum des Saugelements herrschende Unterdruck fortlaufend gemessen und bei Unterschreitung eines Grenzwerts des Betrags des Unterdrucks der Hub des Kolbens vergrößert, um den Unterdruck betraglich wieder zu vergrößern, wird der Gefahr entgegen gewirkt, dass bei zu starkem Absinken die Haltekraft einen kritischen Wert unterschreitet, so dass die Portion von der Aufnahmeeinrichtung abfällt, wodurch erhebliche Störungen im Produktionsablauf ausgelöst würden. Sollte nämlich im Bereich der Kontaktfläche des Saugelements eine geringe Undichtigkeit bestehen, so würde der Unterdruck im Laufe der Handhabung der aufgenommenen Portion absinken. Um dies zu vermeiden, ist eine stetige Unterdrucküberwachung sinnvoll und als Reaktion bei eventueller Unterschreitung eines Mindestbetrags des Unterdrucks eine nachträgliche Erhöhung des Unterdrucks sinnvoll. Dies geschieht dann dadurch, dass der Kolben der Kolben-Zylinder-Einheit - der sich zuvor nicht in seiner Totpunktlage befand - noch zumindest ein Stück weiter auf diese Totpunktlage zubewegt wird, wodurch der Unterdruck nochmals vergrößert wird, um auf diese Weise bis zum Ende der Handhabung der jeweiligen Portion ein Verlieren derselben sicher zu vermeiden. Bedarfsweise kann die nachträgliche Unterdruckvergrößerung auch in mehreren Schritten erfolgen, falls der Handhabungsvorgang länger andauert und wiederholt die Unterschreitung des Mindestbetrags des Unterdrucks festgestellt wird.

Der Kolben der Kolben-Zylinder-Einheit führt somit eine oszillierende, d.h. eine Hin- und HerBewegung aus, weshalb das Luftvolumen in einem möglichen Verbindungsquerschnitt bzw. einer möglichen Verbindungsleitung zwischen der Kolben-Zylinder-Einheit und dem Saugelement ebenso eine oszillierende bzw. schwingende Bewegung mit der Frequenz der einzelnen Fixiervorgänge vollführt. Im Gegensatz zu dem Verfahren nach dem Stand der Technik findet keine dauerhafte gerichtete Durchströmung der Verbindungsleitung zwischen Saugelement und Unterdruckerzeuger statt, wodurch kein Transport von Luft und damit auch von mitgeschleppten Lebensmittelpartikeln von dem Saugelement in Richtung auf den Unterdruckerzeuger, d.h. die Kolben-Zylinder-Einheit, stattfindet. Vielmehr wird die beim "Hin-Hub" des Kolbens in Richtung auf die Kolben-Zylinder-Einheit eingesogene Luft beim kurze Zeit später erfolgenden "Her-Hub" des Kolbens wieder in die entgegengesetzte Richtung befördert und zwar um dieselbe Bewegstrecke. Mischungsvorgänge in der Luftsäule spielen dabei eine eher untergeordnete Rolle und können in erster Näherung außer Acht gelassen werden.

Mit dem erfindungsgemäßen Verfahren lässt sich somit die durch Unterdruckerzeuger in Form von dauerhaft in Betreib befindlichen Vakuumpumpen verursachte Hygieneproblematik sehr wirkungsvoll reduzieren. Darüber hinaus tritt im Vergleich mit den Vakuumpumpen auch ein nicht unerheblicher Energiespareffekt auf, da der Unterdruck lediglich genau zu dem Zeitpunkt erzeugt wird, wo er zur Fixierung der gerade aufzunehmenden Portion auch tatsächlich benötigt wird. Ein unnötiges ständiges Ansaugen auch in Phasen, in denen keine Fixierung einer Portion stattfindet, wird somit vermieden.

Um angesichts der großen Dynamik der Handhabungsvorgänge von Lebensmittelportionen, die Massenkräfte im Bereich der Aufnahmeeinrichtung und damit auch die von einer Trageinrichtung aufzunehmenden Kräfte klein zu halten, ist die Kolben-Zylinder-Einheit von der Aufnahmeinrichtung beabstandet und vorzugsweise stillstehend angeordnet und der Unterdruck wird über eine vorzugsweise flexible Leitung zu dem Saugelement der Aufnahmeeinrichtung übertragen. Dies bedeutet, dass die Trägheit des Saugelements lediglich von dem Saugelement selbst bestimmt wird, wobei dies im Verhältnis zu der Kolben-Zylinder-Einheit ein geringes Gewicht aufweist.

Da das Gewicht der Kolben-Zylinder-Einheit bezüglich der Dynamik der Handhabungsvorgänge keine Rolle spielt, kann sie dennoch groß und schwer ausgebildet werden und einen großen Gesamt-Hub besitzen. Hieraus resultiert bedarfsweise eine große Unterdruckreserve.

Ein weiterer Vorteil der oszillierenden Bewegung des Kolbens der erfindungsgemäßen Kolben-Zylinder-Einheit besteht darin, dass dieser nicht nur zur Erzeugung eines Unterdrucks, sondern ebenso auch zur Erzeugung eines Überdrucks geeignet ist. Hierzu kann z.B. vor der Rückbewegung des Kolbens eine Bypassöffnung in der Verbindungsleitung in der Nähe der oder an der Kolben-Zylinder-Einheit geöffnet werden, wodurch das Vakuum durch einströmende Umgebungsluft ausgeglichen wird und sich eine von der Kolben-Zylinder-Einheit weg gerichtete Durchströmung der Verbindungsleitung ergibt. Sobald der Unterdruck in dem Saugelement und der Verbindungsleitung zumindest teilweise abgebaut ist, spätestens jedoch nach vollständigem Abbau, wird der Bypass wieder geschlossen und erst dann erfolgt die Rückbewegung des Kolbens, weshalb dann ein Überdruck in der Verbindungsleitung und dem Saugelement erzeugt wird, der ein beschleunigtes Absetzen der zuvor fixierten Portion bewirkt. Jedenfalls kann auf diese Weise der Portion eine abwärts auf den Zielort gerichtete Beschleunigung erteilt werden, die größer als die Erdbeschleunigung ist. Auch findet in diesem Fall eine Durchströmung der Verbindungsleitung mit mehr Luft in Richtung von der Kolben-Zylinder-Einheit zu dem Saugelement, als in die entgegengesetzte Richtung statt. Beim Hin-Saughub eventuell zunächst angesaugte Lebensmittelpartikel oder Fleischsaft (insbesondere bei Pökelware) werden somit sicher wieder aus der Verbindungsleitung herausgefördert, was eine Art Selbstreinigungseffekt darstellt und hygienische Probleme in der Leitung oder der Pumpe sicher verhindert.

Gemäß einer vorteilhaften Ausgestaltung des erfindungsgemäßen Verfahrens wird das Saugelement während des Absenkens der Aufnahmeeinrichtung auf eine aufzunehmende Portion relativ zu einem Zentralteil der Aufnahmeeinrichtung bewegt. Hierdurch kann eine automatische Anpassung an unterschiedliche Höhen der jeweils zu ergreifenden Lebensmittelportion erreicht werden und die Zustellbewegung der Aufnahmeeinrichtung an sich kann dauerhaft so bemessen sein, dass sie gerade ausreicht, um das Saugelement in Saugkontakt mit einer Portion zu bringen, die eine minimale mögliche Höhe besitzt.

Das erfindungsgemäße Verfahren weiter ausgestaltend ist vorgesehen, dass die Portion an ihrer freien Oberfläche in mindestens einem Stützbereich, der sich radial außerhalb der Kontaktfläche des Saugelements befindet, derart abgestützt wird, dass ein Hochklappen mindestens eines Freibereichs der Portion verhindert wird. Hierdurch wird die Handhabung der Portion auch bei hochdynamischen Verlagerungsprozessen unempfindlich gegenüber unkontrollierten und unerwünschten Bewegungen der Portion. Dies ist insbesondere bei Portionen von Wichtigkeit, die sich in Längen- und/oder Breitenrichtung weit über die Kontaktfläche des Saugelementes heraus erstrecken und eine vergleichsweise große Flexibilität besitzen.

Sinnvollerweise kann der mindestens eine Stützbereich dabei von einem an dem Saugelement befestigten, vorzugsweise federnd mit diesem verbundenen Arm gebildet werden. Typischerweise sind eine Mehrzahl derartiger Arme vorhanden, um an einer Mehrzahl von Punkten eine Abstützung der Portion sicherzustellen.

Ausgehend von einer Vorrichtung der weiter oben genannten Art wird die zugrunde liegende Aufgabe dadurch gelöst, dass die Einrichtung zur Erzeugung des Unterdrucks eine Kolben-Zylinder-Einheit ist, mit der der Unterdruck in dem Innenraum des Saugelements dadurch erzeugbar ist, dass ein Kolben der Kolben-Zylinder-Einheit pro Fixiervorgang einer Portion eine Hubbewegung in einem Zylinder der Kolben-Zylinder-Einheit ausführt, wobei die Einrichtung zur Erzeugung des Unterdrucks beabstandet von dem Saugelement und der Aufnahmeeinrichtung und vorzugsweise stillstehend angeordnet ist, wobei die Kolben-Zylinder-Einheit und das Saugelement über eine vorzugsweise flexible Leitung zur Übertragung des Unterdrucks miteinander verbunden sind und wobei die Vorrichtung eine Druckmesseinrichtung umfasst, mit der der in dem Innenraum des Saugelements herrschende Unterdruck messbar ist, wobei eine Steuerungseinrichtung vorgesehen ist, die eine Vergrößerung des Hubs des Kolbens der Kolben-Zylinder-Einheit bewirkt, wenn der von der Druckmesseinrichtung gemessene Unterdruck betraglich einen Grenzwert unterschreitet.

Das weiter oben genannte erfindungsgemäße Verfahren lässt sich mit einer derartigen Vorrichtung auf besonders einfache und rationelle Weise durchführen. Auch die Sicherheit gegen ein unbeabsichtigtes Verlieren der Lebensmittelportion während dessen Handhabung auch bei längeren Verweildauern am Saugelement und bei eventuell im Bereich der Kontaktfläche auftretenden kleineren Undichtigkeiten ist so weiter vergrößert.

Die erfindungsgemäße Vorrichtung kann sinnvoller Weise dahingehend weitergebildet werden, dass die Portion an ihrer freien Oberfläche in mindestens einem Stützbereich, der sich radial außerhalb der Kontaktfläche des Saugelements befindet, derart abstützbar ist, dass ein Hochklappen mindestens eines Freibereichs der Portion verhinderbar ist.

Vorzugsweise ist dabei der mindestens eine Stützbereich von einem an dem Saugelement befestigten Arm gebildet, der vorzugsweise federnd mit dem Saugelement verbunden ist, wobei weiter vorzugsweise eine Mehrzahl von Armen in Umfangsrichtung verteilt an einem Tragring angeordnet ist, der vorzugsweise klemmend an der äußeren Mantelfläche des Saugelements befestigbar ist. Eine derartige Spinne lässt sich durch Verschiebung ihres Tragrings in eine Richtung senkrecht zu der eines Transportbandes einfach justieren.

Die Erfindung wird nachfolgend anhand eines Ausführungsbeispiels, dass in der Zeichnung dargestellt ist, näher erläutert. Es zeigt:
Fig. 1: eine Seitenansicht eines Aufnahmeelements,
Fig. 2: einen Schnitt durch die Aufnahmeeinrichtung gem. Fig. 1,
Fig. 3a: eine Seitenansicht einer Vorrichtung zur Erzeugung von Unterdruck bzw. Überdruck und
Fig. 3b: wie Fig. 3a jedoch in einem Schnitt.

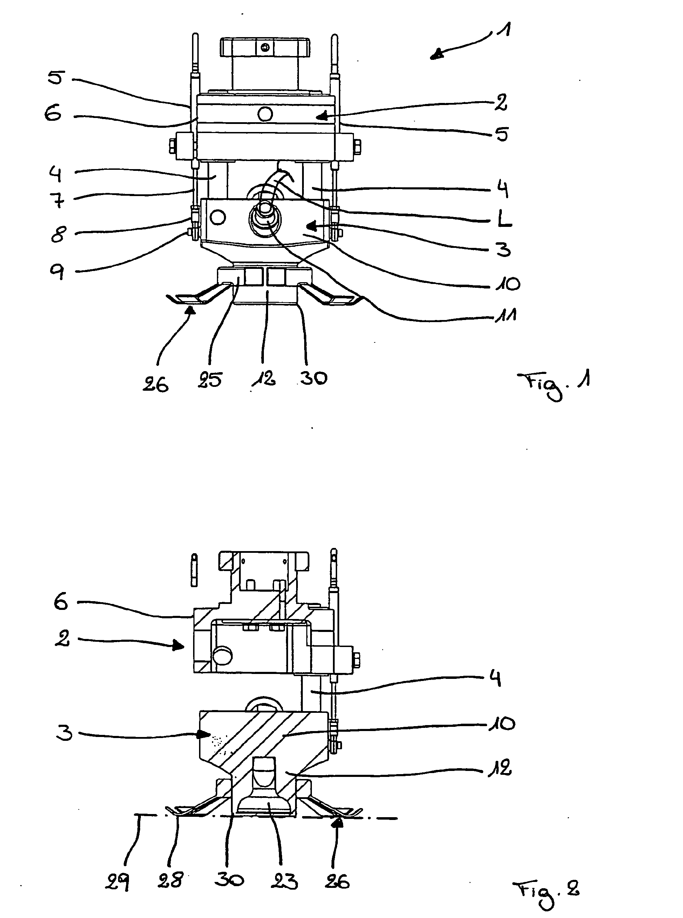

Eine in den Fig. 1 und 2 dargestellte Aufnahmeeinrichtung 1 bildet einen Teil eines bekannten, jedoch nicht im ganzen dargestellten Handlingsystems für das Verlagern von Lebensmittelportionen, insbesondere solchen in Scheibenform, wobei es sich um dickere Einzelscheiben (Koteletts, Steaks, Schnittkäse, Stücke, etc.) oder um eine Ansammlung einer Mehrzahl dünnerer Scheiben (z.B. Schinken, Salami, Fleischwurst, Käse, Räucherlachs etc) handeln kann, die dann typischerweise in gefächerter bzw. geschindelter Anordnung vorliegen.

Die Aufnahmeeinrichtung 1 befindet sich am Ende einer nicht dargestellten Trageinrichtung, die wiederum einen Teil eines Robotersystems bildet. Die Trageinrichtung ermöglicht es, dass die Aufnahmeeinrichtung 1 zwischen den Orten, zwischen denen die Verlagerung der Portionen des Lebensmittels zu erfolgen hat, bewegt werden kann. So kann es beispielsweise der Fall sein, dass Lebensmittelportionen von einem Transportmittel in Form eines Transportbandes, mit dem sie von einer Schneidvorrichtung weg bewegt werden, abgehoben und sodann auf einem anderen Transportband wieder abgelegt werden. Häufig ist es auch der Fall, dass nach dem Aufschneiden Lebensmittelportionen diese von dem Transportband aufgenommen und sodann in eine Verpackung, typischerweise eine aus Kunststoff bestehende Schale, verlagert werden. Häufig werden aufgeschnittene Lebensmittel, nämlich unmittelbar im Anschluss an den Schneidvorgang, in einer Verpackungsmaschine in Selbstbedienungsverpackungen eingeschweißt.

Die Aufnahmeeinrichtung 1 selbst umfasst ein Zentralteil 2 und ein damit verbundenes Saugelement 3. Von dem Zentralteil 2 gehen nach unten zwei Linearführungen 4 aus, die den Körper des Zentralteils 2 gleitend durchdringen. Hierdurch wird das Saugelement 3 in vertikale Richtung verschiebbar an das Zentralteil 2 angebunden.

Zusätzlich zu den Linearführungen 4 ist das Saugelement 3 noch an gegenüberliegenden Seiten über jeweils eine Gasfeder 5 mit dem Zentralteil 2 verbunden. Die Gasfedern 5 sind in rinnenförmigen Ausnehmungen an Stirnflächen 6 des Zentralteils 2 befestigt. Ihre Kolbenstangen 7 führen zu dem Saugelement 3 und sind dort mittels jeweils eines Gelenkkopfs 8 an seitlich aus dem Saugelement 3 herausragenden Lagerzapfen 9 angeschlossen. Gegen die Kraft der Gasfedern 5 lässt sich somit das Saugelement 3 entlang der Linearführungen 4 nach oben, d.h. auf das Zentralteil 2 zu bewegen, wobei die Federkonstante der Gasfeder 5 einstellbar ist.

Das Saugelement 3 weist ein Oberteil 10 auf, an das die Linearführungen 4 und die Gasfedern 5 anschließen. An dem Oberteil 10 befindet sich auch ein Anschlussstutzen 11 zur Versorgung des Saugelements 3 mit Unterdruck bzw. gegebenenfalls mit Überdruck. Dies wird weiter unten noch näher erläutert. An einem einstückig mit dem Oberteil 10 verbundenen Unterteil 12 des Saugelements 3 ist an dessen unterem Ende eine ringförmige Kontaktfläche 30 ausgebildet, die beim Aufsetzen des Saugelements 3 auf eine aufzunehmende Portion mit deren Oberfläche in Kontakt kommt und die für den Unterdruckaufbau erforderliche Abdichtung ermöglicht.

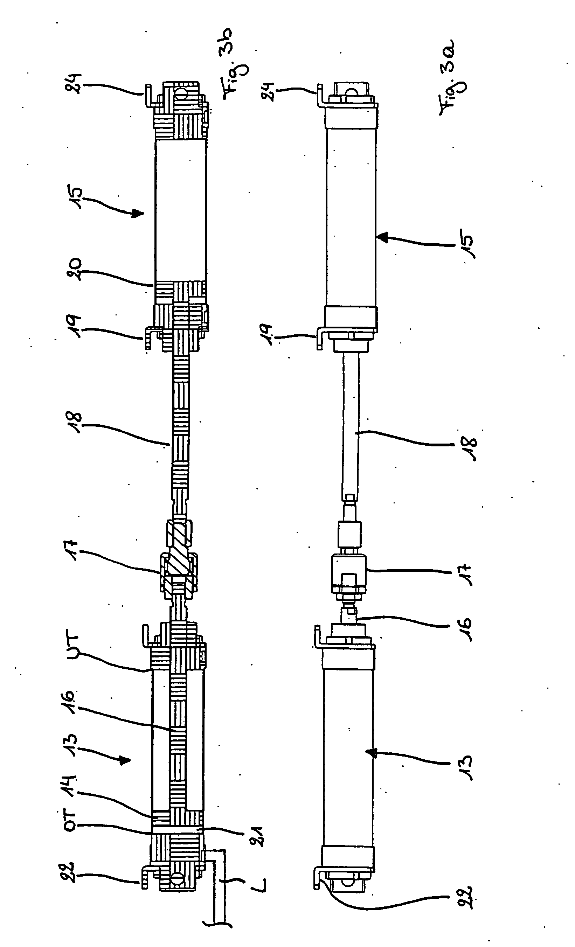

Eine von dem Anschlussstutzen 11 ausgehende Leitung (L) führt entlang der Trageinrichtung der Aufnahmeeinrichtung 1 zu einem Ort, an dem der Unterdruck bzw. Überdruck erzeugt wird. Dies geschieht im vorliegenden Fall mit Hilfe einer Kolben-Zylinder-Einheit 13, die in den Fig. 3a und 3b dargestellt ist. Ein Kolben 14 der Kolben-Zylinder-Einheit 13 wird mit Hilfe eines weiteren als Antrieb dienenden Pneumatikzylinders 15 betätigt. Zu diesem Zweck ist eine Kolbenstange 16 an ihrem freien Ende mit einem Kopplungselement 17 versehen, das wiederum mit dem freien Ende einer Kolbenstange 18 des umgekehrt angeordneten Pneumatikzylinders 15 verbunden ist. Wird der Pneumatikzylinder 15 abwechselnd in seiner linken Kammer über den Anschlussstutzen 19 mit Druckluft versorgt, so bewegt sich ein Kolben 20 des Pneumatikzylinders 15 nach rechts, was aufgrund der Kopplung der beiden Kolbenstangen 16, 18 in gleicher Weise für den Kolben 14 der Kolben-Zylinder-Einheit 13 gilt. Ist beispielsweise eine in Fig. 3b links sichtbare Kammer 21 in der Kolben-Zylinder-Einheit 13 über einen Anschlussstutzen 22 und eine nicht dargestellte, entlang der Trageinrichtung führende Leitung mit dem Saugelement 3 der Aufnahmeeinrichtung 1 verbunden, so führt eine Verlagerung des Kolbens 14 von einem oberen Totpunkt OT zu einem unteren Totpunkt UT zu einer Unterdruckbeaufschlagung eines Innenraums 23 in dem Saugelement 3. Wird der Innenraum 23 in dem Saugelement 3 über eine nicht dargestellte Ventileinrichtung zu einem späteren Zeitpunkt belüftet, um das Abwerfen der gehaltenen Portion einzuleiten, so führt ein unmittelbar anschließendes (nach dem Schließen des Belüftungsventil beginnendes) Beaufschlagen des Pneumatikzylinders 15 über einen Anschlussstutzen 24 mit Druckluft zu einer entgegengesetzten Bewegung der beiden Kolbenstangen 16, 17, so dass sich der Kolben 14 der Kolben-Zylinder-Einheit 13 von seinem unteren Totpunkt UT zu seinem oberen Totpunkt OT zurückbewegt und dadurch Luft aus der linken Kammer verdrängt und auf diese Weise einen Überdruck in dem Innenraum 23 des Saugelements 3 aufbauen kann, wodurch die Abwurfbewegung der Portion beschleunigt wird.

Ein wesentlicher weiterer Effekt der Unterdruck-Aufhebung mit Hilfe eines separat angesteuerten Belüftungsventils, das vorzugsweise angrenzend an die Kolben-Zylinder-Einheit 13 in der Verbindungsleitung angeordnet ist, ist die Schaffung einer in der Bilanz von der Kolben-Zylinder-Einheit 13 weggerichteten Netto-Durchströmung der Verbindungsleitung. Eventuell eingesaugte Partikel bzw. eingesaugter Fleischsaft, wird somit - zumindest über eine Mehrzahl von Hüben betrachtet - tendenziell wieder aus der Verbindungsleitung heraus in das Saugelement hinein und letztendlich wieder aus diesem heraus gefördert und kann insbesondere nicht in die Kolben-Zylinder-Einheit 13 gelangen. Dies hat den entscheidenden Vorteil, dass Lebensmittelpartikel erst gar nicht in unzugängliche Bereiche gelangen und dort unbemerkt verderben und als Quelle für mikrobielle Verunreinigung dienen können. Vielmehr werden die Lebensmittelpartikel "frisch", d.h. unverdorben, wieder aus der Vorrichtung abgegeben und zusammen mit der Portion abgeführt, was keinerlei hygienisches Problem hervorruft.

Nicht in der Zeichnung dargestellt ist ein Gitter, das an der Unterseite des Saugelements 3 in dessen der Portion zugewandten Öffnungsquerschnitt eingesetzt ist. Das Gitter soll verhindern, dass lose Stücke von Portionen oder Portionen mit sehr kleiner Oberfläche insgesamt durch den Unterdruck in den Innenraum 23 des Saugelements 3 eingesaugt werden und dort beispielsweise zu einer Verstopfung der Verbindungsleitung führen können. Das Gitter besteht aus rechtwinklig zueinander verlaufenden Gitterstäben, die zusammen quadratische Öffnungen mit einer lichten Weite von jeweils ca. 10 mm X 10 mm begrenzen. Das Gitter verhindert darüber hinaus größere Verformungen der Portion im Bereich der Ansaugung und vermeidet damit einen unvollkommenen Vakuumaufbau, da das Volumen des Innenraums im Wesentlichen erhalten bleibt. Durch das Gitter werden darüber hinaus bleibende Verformungen in Form von "Ausbeulungen" in der Lebensmittelportion verhindert, da aufgrund der größenmäßig kleinen Gitterfelder die noch möglichen kleineren Verformungen nicht das Maß einer einzigen großen Verformung in der Größe des gesamten Öffnungsquerschnitts des Saugelements annehmen.

Im Zuge der Unterdruckerzeugung in der Kammer 21 der Kolben-Zylinder-Einheit 13 und damit auch der Unterdruckerzeugung in dem Innenraum 23 des Saugelements 3 wird eine Portion, auf die das Saugelement 3 mit seiner unteren Kontaktfläche 30 aufgesetzt ist, angesaugt und fixiert. In diesem Zustand kann die Lebensmittelportion zusammen mit der Aufnahmeeinrichtung mittels der Trageinrichtung beliebig verlagert werden.

An dem Unterteil 12 des Saugelements 3 befindet sich ein geschlitzter Tragring 25, der an gegenüberliegenden Seiten jeweils drei radial nach außen abstehende Arme 26 besitzt, deren Enden 27 nach oben gebogen sind. Die Arme 26 besitzen im Bereich einer Knick- bzw. Biegestelle 28 jeweils einen Fixierbereich, der deckungsgleich mit einem an einer freien Oberfläche der Lebensmittelportion befindlichen Stützbereich zusammenwirkt. Auch bei hoch dynamischen Bewegungsvorgängen wird vermieden, dass die Lebensmittelportion, insbesondere wenn die vergleichsweise weit über die Umrisse des Kontaktbereichs an der Unterseite des Saugelements 3 vorsteht, hochklappt und damit ein kontrolliertes und geometriegenaues Ablegen der Lebensmittelportion stark erschwert.

Eine Ebene 29, die durch die Knick- und Biegestellen 28 der Arme 26 definiert wird, befindet sich um ein geringes Maß tiefer, als die durch die Kontaktfläche 30 an der Unterseite des Saugelements 3 definierte Ebene. Aufgrund der federelastischen Eigenschaften der Arme 26 liegen diese auf der Oberfläche der aufzunehmenden Lebensmittelportion auf und werden leicht nach oben verlagert, bevor das Saugelement 3 mit seiner Kontaktfläche 30 aufsetzt.

Eine sichere und eine Abdichtung gewährleistende Anlage der Kontaktfläche 30 auf der Oberfläche der Lebensmittelportion wird auch dadurch gewährleistet, dass das Zentralteil 2 auch dann noch einen gewissen Weg auf die Oberfläche der Lebensmittelportion zu bewegt wird, wenn die Kontaktfläche 30 des Saugelements 3 bereits auf der freien Oberfläche der Lebensmittelportion aufgesetzt hat, so dass es sodann noch zu einer gewissen Relativbewegung zwischen dem Saugelement 3 und dem oberen Zentralteil 2 der Aufnahmeeinrichtung 1 kommt.

### Bezugszeichenliste

- 1: Aufnahmeeinrichtung
- 2: Zentralteil
- 3: Saugelement
- 4: Linearführung
- 5: Gasfeder
- 6: Stirnfläche
- 7: Kolbenstange
- 8: Gelenkkopf
- 9: Lagerzapfen
- 10: Oberteil
- 11: Anschlussstutzen
- 12: Unterteil
- 13: Kolben-Zylinder-Einheit
- 14: Kolben
- 15: Pneumatikzylinder
- 16: Kolbenstange
- 17: Kopplungselement
- 18: Kolbenstange
- 19: Anschlussstutzen
- 20: Kolben
- 21: Kammer
- 22: Anschlussstutzen
- 23: Innenraum
- 24: Anschlussstutzen
- 25: Tragring
- 26: Arm
- 27: Ende
- 28: Knick- oder Biegestelle
- 29: Ebene
- 30: Kontaktfläche
- L: Leitung

## Patentansprüche

1. Verfahren zum Aufnehmen von Portionen, insbesondere von Scheiben, eines Lebensmittels von einer Oberfläche eines Transportmittels, insbesondere von einem sich bewegenden Band, zum Verlagern der aufgenommenen Portionen und zum Ablegen der Portionen an einem Zielort, insbesondere in oder auf einer Verpackung, mit den folgenden Verfahrensschritten:
- Portionen eines Lebensmittels werden auf einer Oberfläche eines insbesondere umlaufenden Transportmittels in eine Transportrichtung bewegt,
- sukzessive nacheinander wird jeweils eine Portion mittels einer Aufnahmeeinrichtung (1) aufgenommen, wobei
- die Aufnahmeeinrichtung (1) ein Saugelement (3) aufweist, das mit einer Kontaktfläche (30) mit einer einer Auflagefläche der Portion entgegen gesetzten freien Oberfläche der Portion in Kontakt gebracht wird, und wobei
- nach hergestelltem Kontakt in einem Innenraum (23) des Saugelements (3) ein Unterdruck erzeugt wird, wodurch die Portion an dem Saugelement (3) festgehalten wird,
- die festgehaltene Portion wird von der Oberfläche des Transportmittels abgehoben, indem die Aufnahmeeinrichtung (1) entsprechend bewegt wird,
- die abgehobene Portion wird mittels der Aufnahmeeinrichtung (1) quer zu der Transportrichtung bewegt und oberhalb des Zielortes positioniert,
- der Unterdruck in dem Innenraum (23) des Saugelements (3) wird aufgehoben, wodurch die positionierte Portion an dem Zielort abgelegt wird,
**gekennzeichnet durch** die folgenden Verfahrensschritte:
- Der Unterdruck in dem Innenraum (23) des Saugelements (3) wird mit Hilfe einer Kolben-Zylinder-Einheit (13) **durch** einmalige Hubbewegung eines Kolbens (14) in einem Zylinder erzeugt, wobei der Unterdruck von der von der Aufnahmeeinrichtung (1) beabstandet und vorzugsweise stillstehend angeordneten Kolben-Zylinder-Einheit (13) über eine vorzugsweise flexible Leitung (L) zu dem Saugelement (3) der Aufnahmeeinrichtung (1) übertragen wird, wobei
- der Kolben (14) der Kolben-Zylinder-Einheit (13) zunächst nur um einen Teilhub des maximalen Hubs bewegt und der in dem Innenraum (23) des Saugelements (3) herrschende Unterdruck gemessen wird und bei Unterschreitung eines Grenzwerts des Betrags des Unterdrucks der Hub des Kolbens vergrößert wird, um den Unterdruck wieder zu vergrößern.

2. Verfahren nach Anspruch 1, **dadurch gekennzeichnet, dass** das Saugelement (3) beim Ablegen einer Portion mit einem Überdruck beaufschlagt wird, wodurch der Portion eine abwärts auf einen Zielort gerichtete Beschleunigung erteilt wird, die größer als die Erdbeschleunigung ist.

3. Verfahren nach Anspruch 2, **dadurch gekennzeichnet, dass** kurz vor und/oder nach der Positionierung einer Portion über dem Zielort der Innenraum (23) des Saugelements (3) über eine schaltbare Bypass-Öffnung mit Luft gefüllt und damit der Unterdruck reduziert oder gänzlich abgebaut wird, woraufhin durch eine Rück-Hubbewegung des Kolbens (14) der Kolben-Zylinder-Einheit (13) ein Überdruck in dem Innenraum (23) des Saugelements (3) erzeugt wird.

4. Verfahren nach einem der Ansprüche 1 bis 3, **dadurch gekennzeichnet, dass** das Saugelement (3) während des Absenkens der Aufnahmeeinrichtung (1) auf eine aufzunehmende Portion relativ zu einem Zentralteil (2) der Aufnahmeeinrichtung (1) bewegt wird.

5. Verfahren nach einem der Ansprüche 1 bis 4, **dadurch gekennzeichnet, dass** die Portion an ihrer freien Oberfläche in mindestens einem Stützbereich, der sich radial außerhalb der Kontaktfläche (30) des Saugelements (3) befindet, derart abgestützt wird, dass ein Hochklappen mindestens eines Freibereichs der Portion verhindert wird.

6. Verfahren nach Anspruch 5, **dadurch gekennzeichnet, dass** der mindestens eine Stützbereich von einem an dem Saugelement (3) befestigten, vorzugsweise federnd mit diesem verbundenen Arm (26) gebildet wird.

7. Vorrichtung zum Aufnehmen, Verlagern und Ablegen von Portionen, insbesondere Scheiben, eines Lebensmittels, wobei die Portionen von einem sich bewegenden Transportmittel, insbesondere einem umlaufenden Transportband, aufnehmbar, zu einem Zielort bewegbar und dort ablegbar sind, mit
- einer Trageinrichtung, die mindestens in vertikale und in eine Richtung quer zu einer Transportrichtung des Transportmittels bewegbar ist,
- einer Aufnahmeeinrichtung (1), die an der Trageinrichtung angeordnet ist und mit der eine Portion aufnehmbar ist,
- einem Saugelement (3) der Aufnahmeeinrichtung (1), das mit einer Kontaktfläche (30) mit einer einer Auflagefläche der Portion entgegen gesetzten freien Oberfläche der Portion in Kontakt bringbar ist, und
- einer Einrichtung zur Erzeugung eines Unterdrucks, mit der nach Herstellung eines Kontakts zwischen der Kontaktfläche (30) des Saugelements (3) und der Auflagefläche der Portion ein Unterdruck in einem Innenraum (23) des Saugelements (3) erzeugbar ist, wodurch die Portion an dem Saugelement (3) fixierbar und durch Aufhebung des Unterdrucks an einem Zielort der Portion von der Aufnahmeeinrichtung (1) ablegbar ist,
**dadurch gekennzeichnet, dass** die Einrichtung zur Erzeugung des Unterdrucks eine Kolben-Zylinder-Einheit (13) ist, mit der der Unterdruck in dem Innenraum (23) des Saugelements (3) durch einmalige Hubbewegung eines Kolbens (14) in einem Zylinder erzeugbar und die beabstandet von dem Saugelement (3) und vorzugsweise stillstehend angeordnet ist, wobei die Kolben-Zylinder-Einheit (13) und das Saugelement (3) über eine vorzugsweise flexible Leitung (L) zur Übertragung des Unterdrucks miteinander verbunden sind und ferner **gekennzeichnet durch** eine Druckmesseinrichtung, mit der der in dem Innenraum (23) des Saugelements (3) herrschende Unterdruck messbar ist, und **durch** eine Steuerungseinrichtung, die eine Vergrößerung des Hubs des Kolbens (14) der Kolben-Zylinder-Einheit (13) bewirkt, wenn der von der Druckmesseinrichtung gemessene Unterdruck betraglich einen Grenzwert unterschreitet.

8. Vorrichtung nach Anspruch 7, **dadurch gekennzeichnet, dass** die Portion an ihrer freien Oberfläche in mindestens einem Stützbereich, der sich radial außerhalb der Kontaktfläche (30) des Saugelements (3) befindet, derart abstützbar ist, dass ein Hochklappen mindestens eines Freibereichs der Portion verhinderbar ist.

9. Vorrichtung nach einem der Ansprüche 7 oder 8, **dadurch gekennzeichnet, dass** der mindestens eine Stützbereich von einem an dem Saugelement (3) befestigten Arm (26) gebildet ist, der vorzugsweise federnd mit dem Saugelement (3) verbunden ist, wobei vorzugsweise eine Mehrzahl von Armen (26) in Umfangsrichtung verteilt an einem Tragring (25) angeordnet sind, der vorzugsweise klemmend an der äußeren Mantelfläche des Saugelements (3) befestigbar ist.

## Claims

1. A method for receiving portions, in particular of slices of food from a surface of a transporting means, in particular from a moving belt, for displacing the received portions and for depositing the portions at a destination, in particular in or on a packaging, comprising the following method steps:
- portions of food are moved in a transport direction on a surface of an in particular revolving transporting means,
- a portion is in each case received gradually one after the other by means of a receiving device (1), wherein
- the receiving device (1) encompasses a suction element (3), a contact surface (30) of which is brought into contact with a free surface of the portion, which is opposite a bearing surface of the portion, and wherein
- an underpressure is created after the contact has been established in an interior (23) of the suction element (3), whereby the portion is retained on the suction element (3),
- the retained portion is lifted off the surface of the transporting means, in that the receiving device (1) is moved accordingly,
- the lifted off portion is moved at right angles to the transport direction by means of the receiving device (1) and is positioned above the destination,
- the underpressure in the interior (23) of the suction element (3) is overridden, whereby the positioned portion is deposited at the destination,
**characterized by** the following method steps:
- the underpressure in the interior (23) of the suction element (3) is created with the help of a piston-cylinder unit (13) by a one-time stroke movement of a piston (14) in a cylinder, wherein the piston-cylinder unit (13), which is arranged so as to be spaced apart from the receiving device (1) and so as to preferably be idle, transfers the underpressure to the suction element (3) of the receiving device (1) via a preferably flexible line (L), wherein
- the piston (14) of the piston-cylinder unit (13) is initially moved only by a partial stroke of the maximum stroke and the underpressure prevailing in the interior (23) of the suction element (3) is measured and the stroke of the piston is increased when the amount of the underpressure falls below a threshold value, so as to increase the underpressure again.

2. The method according to claim 1, **characterized in that** an overpressure is applied to the suction element (3) in response to the depositing of a portion, whereby an acceleration, which is directed downwards onto a destination and which is larger than the gravity acceleration, is given to the portion.

3. The method according to claim 2, **characterized in that** the interior (23) of the suction element (3) is filled with air via a switchable bypass opening shortly before and/or after the positioning of a portion above the destination, and the underpressure is thus reduced or abolished completely, whereupon an overpressure is created in the interior (23) of the suction element (3) by means of a return stroke movement of the piston (14) of the piston-cylinder unit (13).

4. The method according to one of claims 1 to 3, **characterized in that**, during the lowering of the receiving device (1) onto a portion, which is to be received, the suction element (3) is moved relative to a central part (2) of the receiving device (1).

5. The method according to one of claims 1 to 4, **characterized in that**, at its free surface, the portion is supported in at least one support area, which is located radially outside of the contact surface (30) of the suction element (3), such that at least one free area of the portion is prevented from being folded up.

6. The method according to claim 5, **characterized in that** the at least one support area is formed by means of an arm (26), which is fastened to the suction element (3) and which is connected thereto in a preferably resilient manner.

7. A device for receiving, displacing and depositing portions, in particular slices of food, wherein the portions can be received, moved to a destination and can be deposited there by means of a moving transporting means, in particular a revolving transporting means, comprising
- a support device, which can be moved at least in vertical direction and in a direction at right angles to a transport direction of the transporting means,
- a receiving device (1), which is arranged on the support device and by means of which a portion can be received,
- a suction element (3) of the receiving device (1), a contact surface (30) of which can be brought into contact with a free surface of the portion, which is opposite a bearing surface of the portion, and
- a device for creating an underpressure, by means of which an underpressure can be created in an interior (23) of the suction element (3) after establishing a contact between the contact surface (30) of the suction element (3) and the bearing surface of the portion, whereby the portion can be fixed to the suction element (3) and can be deposited at a destination of the portion by means of the receiving device (1) by overriding the underpressure,
**characterized in that** the device for creating the underpressure is a piston-cylinder unit (13), by means of which the underpressure can be created in the interior (23) of the suction element (3) by a one-time stroke movement of a piston (14) in a cylinder, and which is arranged so as to be spaced apart from the suction element (3) and so as to preferably be idle, wherein the piston-cylinder unit (13) and the suction element (3) are connected to one another via a preferably flexible line (L) for transferring the underpressure, and further **characterized by** a pressure measuring device, by means of which the underpressure, which prevails in the interior (23) of the suction element (3), can be measured, and by a control device, which effects an increase of the stroke of the piston (14) of the piston-cylinder unit (13), when the amount of underpressure, which is measured by the pressure measuring device, falls below a threshold value.

8. The device according to claim 7, **characterized in that**, at its free surface, the portion can be supported in at least one support area, which is located radially outside of the contact surface (30) of the suction element (3), such that a free area of the portion can be prevented from being folded up.

9. The device according to one of claims 7 or 8, **characterized in that** the at least one support area is formed by an arm (26), which is fastened to the suction element (3), which is connected to the suction element (3) in a preferably resilient manner, wherein a plurality of arms (26) is preferably arranged so as to be distributed in peripheral direction on a support ring (25), which can be fastened to the outer jacket surface of the suction element (3) in a preferably clamping manner.

## Revendications

1. Procédé pour reprendre des portions, notamment des tranches d'un produit alimentaire sur une surface d'un moyen de transport, notamment d'une bande en mouvement, pour déplacer les portions reprises et pour déposer les portions en un endroit de destination, notamment dans ou sur un emballage, avec les étapes de procédé suivantes :
- des portions d'un produit alimentaire sont déplacées dans une direction de transport sur une surface d'un moyen de transport notamment en rotation,
- chaque fois une portion est reprise successivement l'une après l'autre au moyen d'un dispositif de reprise (1),
- le dispositif de reprise (1) comportant un élément aspirant (3) qui par une surface de contact (30) est amené en contact avec une surface libre de la portion, opposée à une surface d'appui de la portion et
- après établissement du contact dans un espace intérieur (23) de l'élément aspirant (3), une dépression étant générée, ce qui a pour effet de maintenir la portion sur l'élément aspirant (3),
- la portion maintenue est soulevée de la surface du moyen de transport, par un déplacement en conséquence du dispositif de reprise (1),
- la portion soulevée est déplacée au moyen du dispositif de reprise (1), à la transversale de la direction de transport et positionnée au-dessus de l'endroit de destination,
- la dépression dans l'espace intérieur (23) de l'élément aspirant (3) est annulée, ce qui a pour effet de déposer la portion positionnée à l'endroit de destination,
**caractérisé par** les étapes de procédé suivantes :
- la dépression dans l'espace intérieur (23) de l'élément aspirant (3) est générée à l'aide d'une unité piston-cylindre (13), par une course unique d'un piston (14) dans un cylindre (1), la dépression étant transmise par l'unité piston-cylindre (13) placée à distance du dispositif de reprise (1) et de préférence de manière stationnaire par l'intermédiaire d'un conduit flexible (L) vers l'élément aspirant (3) du dispositif de reprise (1),
- le piston (14) de l'unité piston-cylindre (13) étant d'abord déplacé seulement d'une course partielle de la course maximale et la dépression régnant dans l'espace intérieur (23) de l'élément aspirant (3) étant mesurée et en cas de non-atteinte d'une valeur limite du montant de la dépression, la course du piston étant augmentée, pour ré-augmenter la dépression.

2. Procédé selon la revendication 1, **caractérisé en ce que**, lors de la dépose d'une portion, l'élément aspirant (3) est soumis à une surpression, ce qui a pour effet d'imprimer à la portion une accélération orientée vers le bas, en direction d'un endroit de destination, qui est supérieure à l'accélération due à la gravité.

3. Procédé selon la revendication 2, **caractérisé en ce que** peu avant et/ou après le positionnement d'une portion au-dessus d'un endroit de destination, l'espace intérieur (23) de l'élément aspirant (3) est rempli d'air par l'intermédiaire d'un orifice de dérivation commutable, ce qui a pour effet de réduire la dépression ou de l'annuler complètement, suite à quoi, par une course en retour du piston (14) de l'unité piston-cylindre (13), une surpression est générée dans l'espace intérieur (23) de l'élément aspirant (3).

4. Procédé selon l'une quelconque des revendications 1 à 3, **caractérisé en ce que** pendant la descente du dispositif de reprise (1), l'élément aspirant (3) est déplacé en direction d'une portion à reprendre, par rapport à une partie centrale (2) du dispositif de reprise (1).

5. Procédé selon l'une quelconque des revendications 1 à 4, **caractérisé en ce que** sur sa surface libre, la portion est soutenue sur au moins une zone de soutien, qui en direction radiale se trouve à l'extérieur de la surface de contact (30) de l'élément aspirant (3), de sorte à empêcher un basculement vers le haut d'au moins une zone libre de la portion.

6. Procédé selon la revendication 5, **caractérisé en ce que** l'au moins une zone de soutien est formée par un bras (26) fixé sur l'élément aspirant (3), relié de préférence de manière élastique avec ce dernier.

7. Dispositif pour reprendre, déplacer et déposer des portions, notamment des tranches d'un produit alimentaire, les portions pouvant être reprises d'un moyen de transport en mouvement, notamment d'une bande de transport en rotation, déplacées vers un endroit de destination et déposées en cet endroit, avec
- un dispositif porteur, qui est déplaçable au moins en direction verticale et dans une direction à la transversale d'une direction de transport du moyen de transport,
- un dispositif de reprise (1), qui est disposé sur le dispositif porteur et à l'aide duquel une portion peut être reprise,
- un élément aspirant (3) du dispositif de reprise (1), qui par une surface de contact (30) est amené en contact avec une surface libre de la portion, opposée à une surface d'appui de la portion et
- un dispositif pour créer une dépression, à l'aide duquel après établissement d'un contact entre la surface de contact (30) de l'élément aspirant (3) et la surface d'appui de la portion, une dépression peut être générée dans un espace intérieur (23) de l'élément aspirant (3), ce qui a pour effet de fixer la portion sur l'élément aspirant (3) et par annulation de la dépression, de le déposer à l'aide du dispositif de reprise (1) en un endroit de destination de la portion, **caractérisé en ce que** le dispositif pour générer la dépression est une unité piston-cylindre (13), à l'aide de laquelle la dépression dans l'espace intérieur (23) de l'élément aspirant (3) peut être générée par une course unique d'un piston (14) dans un cylindre et qui est placée à distance de l'élément aspirant (3) et de préférence de manière stationnaire, l'unité piston-cylindre (13) et l'élément aspirant (3) étant reliés l'un à l'autre par l'intermédiaire d'un conduit (L) de préférence flexible, pour la transmission de la dépression et **caractérisé par** ailleurs par un dispositif indicateur de pression, à l'aide duquel la dépression régnant dans l'espace intérieur (23) de l'élément aspirant (3) peut être mesurée, et par un dispositif de commande, qui provoque une augmentation de la course du piston (14) de l'unité piston-cylindre (13), lorsque le montant de la dépression mesurée par le dispositif indicateur de pression n'atteint pas une valeur limite.

8. Dispositif selon la revendication 7, **caractérisé en ce que** sur sa surface libre, la portion peut être soutenue sur au moins une zone de soutien, qui en direction radiale se trouve à l'extérieur de la surface de contact (30) de l'élément aspirant (3), de sorte à empêcher un basculement vers le haut d'au moins une zone libre de la portion.

9. Dispositif selon l'une quelconque des revendications 7 ou 8, **caractérisé en ce que** l'au moins une zone de soutien est formé par un bras (26) fixé sur l'élément aspirant (3) qui est relié de préférence de manière élastique avec l'élément aspirant (3), de préférence une pluralité de bras (26) étant disposée en étant distribuée dans le sens périphérique sur une bague porteuse (25) qui peut se fixer de préférence par serrage sur la surface d'enveloppe extérieure de l'élément aspirant (3).
